Europäisches Patentamt

European Patent Office

Office européen des brevets

(11) Publication number: **0 501 047 A1**

# EUROPEAN PATENT APPLICATION

(21) Application number: **91301482.5**

(22) Date of filing: **25.02.91**

(51) Int. Cl.5: **H01G 9/04**

(43) Date of publication of application:
**02.09.92 Bulletin 92/36**

(84) Designated Contracting States:
**DE FR IT**

(71) Applicant: **SHOWA ALUMINUM KABUSHIKI KAISHA**
**224-banchi Kaizancho 6-cho**
**Sakaishi Osaka(JP)**

(72) Inventor: **Fujihira, Tadao**
**224-banchi, Kaizancho 6-cho**
**Sakaishi, Osaka(JP)**
Inventor: **Kato, Yutaka**
**224-banchi, Kaizancho 6-cho**
**Sakaishi, Osaka(JP)**
Inventor: **Tada, Kiyoshi**
**224-banchi, Kaizancho 6-cho**
**Sakaishi, Osaka(JP)**
Inventor: **Isayama, Eizo**
**224-banchi, Kaizancho 6-cho**
**Sakaishi, Osaka(JP)**
Inventor: **Tamura, Takashi**
**224-banchi, Kaizancho 6-cho**
**Sakaishi, Osaka(JP)**
Inventor: **Goshona, Kenji**
**224-banchi, Kaizancho 6-cho**
**Sakaishi, Osaka(JP)**

(74) Representative: **Kerr, Simonne June et al**
**European Patent Attorney POTTS, KERR & CO. P.O. Box 688**
**Ascot Berkshire SL5 8YT(GB)**

(54) **Method for manufacturing aluminum foils used as electrolytic capacitor electrodes.**

(57) Aluminum foils used as a material of electrodes in electrolytic capacitors are manufactured by a method in which a surface portion an aluminum foil is removed at first before the foils are electrochemically or chemically etched later. Then, an initial internal oxide coating 5 to 50 Å thick is formed on surface of the aluminum foils from which the surface portion has been removed. Subsequently, the aluminum foils are subjected to high temperature heat treatment such that the whole thickness of the oxide coating does not exceed 70 Å.

EP 0 501 047 A1

## BACKGROUND OF THE INVENTION

### 1. Field of the Invention

The invention relates to a method for manufacturing aluminum foils which are used as electrodes in electrolytic capacitors or condensers. The word "aluminum" in this specification defines and includes aluminum and its alloys.

### 2. Description of Prior Art

Aluminum foils are generally used as the electrodes in electrolytic capacitors, and before incorporated therein, subjected to chemical or electrochemical etching treatment in order to increase their effective surface and their capacitance per unit surface area. Simple etching treatment however cannot provide such foils with satisfactory capacitance.

High temperature heat treatment has widely been employed to be carried out at a temperature of about 500 °C or higher during final annealing process after foil rolling process, so that "cluster texture" rich in "cubic azimuth" might be enhanced to the foils thereby improving their etching property. This method has also proved insufficient to meet the recent needs and demands for higher capacitance of electrolytic capacitors.

The present applicant proposed, as disclosed on the Japanese Patent Publication 58-34925, an aluminum material for electrolytic capacitors which material comprised an aluminum foil covered with a crystalline $\gamma$ -$Al_2O_3$ coating of a given thickness and was improved in its etching property. The material were to be produced by forming at first a hydrated coating on the surface of aluminum foil. Subsequently, the aluminum foil covered with the hydrate coating was heated in non-oxidizing atmosphere at 500 to 600 °C for 2 to 10 hours. Said hydrate coating was thus converted to a crystalline $\gamma$ -$Al_2O_3$ layer of 40 to 200 Å in thickness.

This method has however not increased capacitance to a sufficient degree.

## OBJECTS AND SUMMARY OF THE INVENTION

Therefore, an object of the invention is to provide a method for manufacturing aluminum foils which are used as electrolytic capacitor electrodes, are excellent in their etching property, and are of a high capacitance.

Another object of the invention is to provide a method for manufacturing aluminum foils used as electrolytic capacitor electrodes, in which method high capacitance is enhanced without failure to the aluminum foils in a stable manner without any significant variation between individual capacitance values.

The inventors have conducted various studies in order to accomplish these objects and have found the whole thickness of an internal and external oxide layers or coatings to be a very important factor with respect to the objects of the invention, said internal coating being formed on the surface of an aluminum foil during final annealing treatment thereof. More in detail, the inventors became cognizant of a fact that if the internal oxide coating of controlled thickness is formed uniform during an initial stage of annealing treatment before a succeeding high temperature heat treatment, a number of etching nuclei are generated on said surface. The nuclei correspond to such cells or subgrains as existing at the initial stage on the surface of said foil, and do function as nuclei for producing etching pits. Another fact has also been found by the inventors that an additional or external oxide coating should be as thin as possible, this coating being additionally produced on the surface of the internal oxide coating during the high temperature heat treatment. This novel knowledge has led to the present invention.

The abovementioned objects are accomplished in the invention by employing a method for manufacturing aluminum foils used as a material of electrodes in electrolytic capacitors, the method comprising the steps of: removing a surface portion of an aluminum foil before electrochemical or chemical etching treatment thereof; forming an internal oxide coating 5 to 50 Å thick on the surface of the aluminum foil from which the surface portion has been removed; and conducting a high temperature heat treatment of the aluminum foil to form an external oxide coating on the surface of the internal oxide coating which has been produced during the preceding step wherein the whole thickness of the oxide coatings is controlled to be 70 Å or less.

## BRIEF DESCRIPTION OF THE DRAWINGS

EP 0 501 047 A1

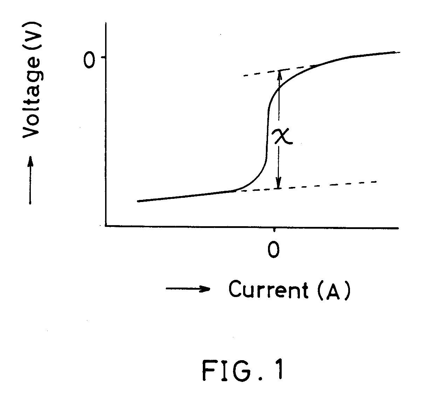

In the drawings, Fig. 1 is a graph showing a relationship between current and voltage, the relationship illustrating the Hunter-Hall method adopted to determine thickness of oxide coatings in an embodiment.

DETAILED DESCRIPTION OF THE INVENTION

Aluminum foils used in the invention are desirably formed from an aluminum of purity of 99.99 % or higher, however, the purity is not restricted thereto but may be that which falls within a range suited as a material for the electrolytic capacitors.

The removing of an outermost surface portion of raw aluminum foil is effected to remove an ununiformed surface layer which has been produced during the rolling process for manufacturing the raw foil. Such an outermost portion to be removed is generally contaminated with oils and comprises a thin inhomogeneous oxide layer which are produced during the rolling process. Furthermore, a "subcutaneous" portion adjacent to and under the outermost portion includes an inhomogeneously deteriorated layer and a contaminated layer which are produced by the rolling process and the roll-coating step thereof, respectively. These inhomogeneous outermost and subcutaneous portions will prejudice uniformity in the subsequently formed oxide coating, thereby lowering the electrostatic capacitance of the foils. Therefore, said inhomogeneous portions are previously removed prior to the succeeding steps conducted in the invention so as to form a uniform oxide coating to thereby increase the capacitance of said foils. Any suitable method may be employed here to remove such inhomogeneous surface portions. Examples of such methods include the wet etching methods such as alkali etching and acid etching and the dry etching methods such as ion-beam etching. Removal of the surface inhomogeneous portions is to be carried out to a depth of 5 Å or more, and more desirably to a depth of 20 Å or more from the surface of foils, in order to ensure such an intentional effect as mentioned above. However, removal of said portions to a depth greater than 500 Å will be useless giving no further effect.

Initial or internal oxide coating, which is to be formed on the surface of aluminum foil after the outermost layer has been removed, must be of a thickness from 5 to 50 Å, because this thickness is deemed effective to produce etching nuclei formed of "membrane faults" in the surface layer and corresponding to distribution of cells or subgrains on the foil surface. The thickness less than 5 Å is likely to prevent the forming of etching nuclei. On the other hand, the thickness greater than 50 Å will cause the produced etching nuclei to be lost. The most preferable range of thickness is from 15 to 45 Å. The coating of 5 to 50 Å in thickness and having the etching nuclei may be formed, according to the invention, by a low temperature heat treatment within an atmosphere of air or argon gas (Ar) which contains water vapor or oxygen gas. A desirable condition for the treatment can be provided by adopting: heating temperature of 40 to 200 °C; duration of heating of 10 minutes to 24 hours; atmosphere pressure of 2 atms or higher; and content of water vapor ($H_2O$) being 0.01 Kg/Kg or more. Such heating temperature within the range of 40 to 200 °C is important because the oxide coating is hardly formed at a temperature below 40 °C, while the resulting capacitance of the foil is not increased if the foil is treated at a temperature above 200 °C. Though the oxide coating will be formed in general more quickly at higher temperatures, such an extremely quick formation of the coating will so undesirably increase the size of cells or subgrains that the number of etching pits is reduced to lower the capacitance. The most desirable heating temperature is from 60 to 150 °C. Regarding the heating duration from 10 minutes to 24 hours, it is to be noted that a period shorter than 10 minutes is too short to provide the oxide coating of an acceptable thickness. Heating for longer than 24 hours however produces no additional thickness of coating, but merely resulting in waste of heating energy and thereby raising manufacture cost. The most desirable duration of heating is from 30 minutes to 24 hours. Further, the pressure of heating atmosphere is to be set at 2 atms or higher as mentioned above in view of a fact that an atmosphere pressure below 2 atms reduces the rate of oxide coating formation and the coating thickness thereby failing to enhance high capacitance to the foils in the event that the heating temperature were not set at a sufficiently high level. It is difficult for a practical equipment to keep its internal pressure higher than 10 atms, although a higher pressure is desirable for the purpose of quicker formation of the oxide coating. Thus, the pressure from 2 to 10 atms is recommended for commercial manufacture equipments. If $H_2O$ content of the heating atmosphere is less than 0.01 Kg/Kg, the oxide coating of a sufficient thickness is hardly obtained. Therefore, $H_2O$ content of 0.01 Kg/Kg, or more desirably 0.02 Kg/Kg or higher, is preferred so that the oxide coating of sufficient thickness is produced rapidly. Low temperature heat treatment described above may either be carried out through a simple stage or through two successive stages with different conditions as to the heating temperature, duration of heating, or other factors.

The step of forming the initial or internal oxide coating is to be carried out while an average size of cells or subgrains in the surface layer of aluminum foil is still 10$\mu$ m or less. This condition is employed here

3

because the respective etching pits seem to be produced in relation with the respective cells or subgrains which exist at an early stage of annealing process, when the aluminum foils are etched. With such an average size of cells or subgrains not exceeding 10$\mu$ m at this step, there exist many cells which increase effective surface area of the foils so as to enhance high capacitance thereto. Thus, the average size which can be controlled by means of the condition of the cold rolling of aluminum foils is more preferably to be 5$\mu$ m or less.

The succeeding step of high temperature heat treatment is carried out after the preceding step has been effected to form the initial or internal oxide coating of 5 to 50 Å in thickness. This step is effective to enhance to aluminum foils a cluster texture rich in cubic azimuths which improve their etching property. An external or additional oxide coating is superposed on the initial or internal oxide coating which has been formed at the preceding step. If the external oxide coating is made too thick, then the etching nuclei which are the faults found in the internal oxide coating will disappear to disable a sufficient number of etching pits from being produced when the etching process is carried out. The high temperature heat treatment at this step is to be effected under such a condition that the whole thickness of the internal and external oxide coatings is maintained at or less than 70 Å. The whole thickness of or below 50 Å is more desirable. The aluminum foils are to be heated within a non-oxidizing atmosphere from which water vapor and oxygen gas have been removed almost completely so that said whole thickness may be kept at or below 70 Å. In detail, an inert gas such as argon gas or an evacuated atmosphere of or below $10^{-3}$ Torrs may be employed as the atmosphere at this succeeding step, which may be carried out at about 460 to about 550 °C for 1 to 24 hours.

The aluminum foils which have undergone the preceding and succeeding steps will subsequently be subjected to electrochemical or chemical etching process, and thereafter used as the material which constitutes the electrolytic capacitors. During the etching process, the etching nuclei and portions adjacent thereto in the oxide coatings are concentratedly etched. Owing to the foil texture having the etching property improved during the high temperature heat treatment, there will be generated deep and big etching pits.

The raw aluminum foils used in the invention may be manufactured by any known method, and may be those which have been subjected to the "process annealing" during the rolling process.

The thickness of oxide coatings in this specification may be determined by means of Hunter-Hall method which will be described below in the section of EMBODIMENTS.

As will be apparent from the description made hereinbefore, the method according to the invention provides surely and stably the aluminum foils which can be etched to produce many etching pits to increase their effective or functional areas, whereby high capacitance is enhanced to the electrolytic capacitors whose electrodes are made of the thus etched aluminum foils.

## THE PREFERRED EMBODIMENTS

### # First Embodiment

An aluminum metal having a purity of 99.99 % was used to prepare raw aluminum foils 100$\mu$ m in thickness. In the rolling process of the foils, its conditions were selected to give such average sizes of cells or subgrains as listed on Table 1.

Next, the raw aluminum foils were immersed in 0.01 % NaOH solution at 30 °C for varied periods of time, in order to remove surface portions amounting to the quantities listed on Table 1.

Subsequently, initial or internal oxide coatings of varied thickness were formed on the surface of said foils, under varied conditions of low temperature heat treatment as shown in Table 1. The thickness of said foils was measured in accordance with the Hunter-Hall method on the following conditions:

Bath: 30 g/l aqueous solution of ammonium tartrate,

Temperature of bath: 30 °C,

Opposite electrode: carbon,

Measuring electrode: samples to be measured, and

Charging rate of direct-current voltage: 5 V/sec.

Table 1

| Samples | | | | Removal of surface | Ave. size (μm) of cells or subgrains | | Conditions of "low temp. heat treatment" | | | Oxide coating (Å) | | Capacitance |
|---|---|---|---|---|---|---|---|---|---|---|---|---|
| | Soln. | Time (sec) | Thick. (A) | | Before L.H.T. | After L.H.T. | Temp. (°C) | Time (hrs.) | $H_2O$ (Kg/Kg) | Init. After L.H.T. | Whole. After H.H.T. | (C.V. |
| Reference | | | | | | | | | | | | |
| 1 | *1 | 0 | 0 | | 4 | 4 | 20 | 0.3 | 0.004 | 2 | 35 | 161 |
| 2 | *1 | 5 | 20 | | 4 | 4 | 20 | 0.3 | 0.004 | 3 | 37 | 168 |
| Invention | | | | | | | | | | | | |
| 3 | *1 | 5 | 20 | | 4 | 6 | 70 | 20 | 0.015 | 28 | 43 | 246 |
| 4 | *1 | 15 | 63 | | 4 | 6 | 70 | 20 | 0.015 | 28 | 43 | 262 |
| 5 | *1 | 60 | 247 | | 4 | 6 | 70 | 20 | 0.015 | 28 | 43 | 268 |
| 6 | *1 | 120 | 503 | | 4 | 6 | 70 | 20 | 0.015 | 28 | 43 | 265 |
| 7 | *1 | 200 | 821 | | 4 | 6 | 70 | 20 | 0.015 | 28 | 43 | 261 |
| Reference | | | | | | | | | | | | |
| 8 | *1 | 60 | 247 | | 4 | 12 | 230 | 20 | 0.030 | 56 | 59 | 179 |

Notes: "Soln." = Solution used,

(*1) = 0.01 % NaOH, at 30 °C,

"Thick." = Thickness,

"Ave." = Average,

"Temp." = temperature,

"Init." = Thickness of initial (internal) coating,

"Whole." = Whole thickness of internal and external

oxide coatings,

"L.H.T." = Low temperature heat treatment,

"H.H.T." = High temperature heat treatment,

"C.V." = (Capacitance) x (Voltage), and

"Thickness of removed surface portion (A)" =

Dissolved quantity (g) / [ Surface area ($cm^2$)

x Aluminum density (i.e., 2.71 $g/cm^3$) ]

Under these conditions, voltage was charged to each test piece of aluminum foil whose capacitance was to be determined, thereby giving a characteristic current-voltage curve as shown in Fig. 1. Then, voltage difference $\chi$ was measured as illustrated in Fig. 1 and used to calculate 'thickness of oxide coating' ( "Thickness" ) by the following equation:

Thickness = $\chi$ x 14 A/V

Average sizes of cells or subgrains of the aluminum foils were also measured before and after the low temperature heat treatment for each test piece, whereby differences as listed on Table 1 were determined.

Subsequently, each test piece of aluminum foil was subjected to the high temperature heat treatment which was carried out at 520 °C for 1 hour within an atmosphere evacuated to $10^{-4}$ Torr. Total thickness of the oxide coatings on the foil surfaces was measured also by the Hunter-Hall method in the same manner as described above, and results obtained are listed on Table 1.

Next, electrolytic etching of the heat-treated samples was executed at 85 °C for 3 minutes in 3 % HCl solution, with a current density of 10 A/dm$^2$. Thereafter, chemical etching of the samples was done for 10 minutes in the same solution. Finally, the samples were put in a 5 % boric acid solution for the purpose of chemical treatment at 350 V, and their capacitance was determined to give such data as listed also on Table 1.

# Second Embodiment

An aluminum metal having a purity of 99.99 % was used to prepare raw aluminum foils which were $100\mu$ m in thickness and had an average size $4\mu$ m of cells or subgrains. The raw aluminum foils were immersed in 0.01 % NaOH solution at 30 °C for 60 seconds, in order to remove surface portions of an average removed thickness of 247 Å.

Subsequently, initial or internal oxide coatings 32 Å in thickness were formed on the surface of said foils, by heating them at 100 °C for 10 hours in an atmosphere containing $H_2O$ at concentration of 0.015 Kg/Kg. Average sizes of cells or subgrains on the surface of the foils were $7\mu$ m after this low temperature heat treatment for each test piece, wherein said average size remained to be or less than $10\mu$ m during this treatment.

Subsequently, each test piece of aluminum foil was subjected to the high temperature heat treatment which was carried out at 520 °C for 1 hour within atmospheres evacuated differently to $10^{-1}$ to $10^{-5}$ Torr. Total thickness of the oxide coatings on the foil surfaces was measured by the Hunter-Hall method, and results obtained thereby are such as listed on Table 2.

Next, etching and chemical treatment of the heat-treated samples was executed under the same conditions as in the first embodiment, and their capacitance was determined to give such data as listed also on Table 2.

Table 2

| Samples | Whole thickness of oxide coatings (Å) | Capacitance (C.V.) |
|---|---|---|
| Invention | | |
| 9 | 43 | 268 |
| 10 | 51 | 231 |
| 11 | 68 | 209 |
| Reference | | |
| 12 | 79 | 182 |

As seen from Tables 1 and 2, the samples according to the invention are formed with higher density of many etching pits which ensure higher capacitance.

**Claims**

1. A method for manufacturing aluminum foils used as a material of electrodes in electrolytic capacitors, the method comprising the steps of:

    removing a surface portion of an aluminum foil before electrochemical or chemical etching treatment thereof;

    forming an initial internal oxide coating 5 to 50 Å thick on the surface of the aluminum foil from which the surface portion has been removed; and

    conducting a high temperature heat treatment of the aluminum foil to form an external oxide coating on the surface of the internal oxide coating, wherein the whole thickness of the oxide coatings is controlled not to exceed 70 Å.

2. A method as defined in claim 1 wherein thickness of the surface portion removed is 5 Å or more.

3. A method as defined in claim 2 wherein thickness of the surface portion removed is 20 Å or more.

4. A method as defined in claim 1 wherein the internal oxide coating is 15 to 45 Å in thickness.

5. A method as defined in claim 1 wherein the whole thickness of oxide coatings is 50 Å or less.

6. A method as defined in claim 1 wherein the initial internal oxide coating is formed while an average size of cells or subgrains is still 10$\mu$ m or less.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 13, no. 132 (E-736)[3480], 31st March 1989; & JP-A-63 299 309 (MATSUSHITA ELECTRIC IND. CO., LTD) 06-12-1988 * Whole abstract * | 1,4-6 | H 01 G 9/04 |
| Y | PATENT ABSTRACTS OF JAPAN, vol. 14, no. 394 (E-969)[4337], 24th August 1990; & JP-A-2 146 718 (SHOWA ALUM. CORP.) 05-06-1990 * Whole abstract * | 1,4-6 | |
| A | DE-A-3 005 727 (SIEMENS AG) | | |

TECHNICAL FIELDS
SEARCHED (Int. Cl.5)

H 01 G

The present search report has been drawn up for all claims

| Place of search | Date of completion of the search | Examiner |
|---|---|---|
| THE HAGUE | 13-09-1991 | SCHUERMANS N.F.G. |

EPO FORM 1503 03.82 (P0401)